# FASCICULE DE BREVET EUROPEEN

(11) **EP 0 614 429 B1**
(45) Date de publication et mention de la délivrance du brevet: **23.08.1995**
(21) Numéro de dépôt: 92923784.0
(22) Date de dépôt: 01.12.1992
(51) Int. Cl.: B62B 3/10

(54) **PROCEDE DE FABRICATION D'UN CHARIOT EN MATIERE SYNTHETIQUE**
VERFAHREN ZUM HERSTELLEN VON TRANSPORTWAGEN AUS KUNSTSTOFF
METHOD FOR PRODUCING A TROLLEY MADE OF A SYNTHETIC MATERIAL

(30) Priorité: 02.12.1991 FR 9114922
(43) Date de publication de la demande: 14.09.1994
(73) Titulaire: I.C.D. HOLDING, NL-4817 MB Breda (NL); GIAT INDUSTRIES, 78000 Versailles (FR)
(72) Inventeur: PALY, Jean-Luc, F-83400 Hyères (FR)
(74) Mandataire: Célanie, Christian
(86) Numéro de dépôt international: EP9202706
(87) Numéro de publication internationale: WO9311018

(56) Documents cités:
- EP-A- 0 364 655
- AU-B- 4 797 885
- US-A- 3 614 133

## Description

L'invention concerne un procédé de fabrication d'un chariot en matière synthetique, en particulier un chariot destiné à usage dans des magasins en libre-service, ledit chariot ayant un premier et un second flanc latéral qui comportent chacun un segment de pied et un segment de panier moulés en une seule pièce, lesdits premier et second flancs latéraux étant reliés entre eux à l'aide d'éléments de jonction.

Un tel procédé de fabrication est connu du brevet US-A-3.614.133. Le chariot connu est formé à partir de deux flancs latéraux identiques. Le segment de panier de chaque flanc latéral est constitué d'un bras qui s'étend à partir du segment de pied vers le haut, c'est-à-dire vers l'endroit où se trouve la poignée. Le segment de pied possède une configuration en épingle à cheveux renforcée par un support central. Un premier grillage est monté sur le bras supérieur de la configuration en épingle à cheveux, ledit grillage est également fixé sur le segment de panier. Les premiers grillages montés sur les flancs latéraux sont reliés entre eux à l'aide de deuxièmes grillages formant les flancs transversaux du panier. L'assemblage des différents composants est réalisé à l'aide de barres munies d'un pas de vis et de boulons.

Un désavantage du chariot obtenu par le procédé connu est qu'une grande partie du panier se trouve en porte-à-faux, ladite partie étant uniquement soutenue par le bras supérieur de ladite configuration en épingle à cheveux. Ce même bras doit également soutenir le premier grillage. Cette construction, conjuguée au fait que le premier grillage est encore relié en un point supérieur du segment de panier, n'assure pas une stabilité suffisante du chariot et peut provoquer un basculement, vers l'avant, du chariot lorsque trop de poids est mis à l'avant du chariot. Pour palier à ce problème, le chariot connu comporte un support central. Toutefois, la présence de ce support central limite l'emboîtement des chariots l'un dans l'autre, ce qui, à son tour, impose une plus grande surface de rangement du parc de chariot.

L'invention a pour but de réaliser un procédé de fabrication d'un chariot permettant d'obtenir un chariot ayant une plus grande stabilité sans limiter les possibilités d'emboîtement.

A cette fin, un procédé suivant l'invention est caractérisé en ce que, lors du moulage des flancs latéraux, on moule en une seule pièce au moins le contour latéral du segment de panier ainsi qu'un premier resp. un second rebord sur le premier resp. le second flanc latéral, lesdits premier et second rebords étant moulés de telle façon qu'ils s'étendent en une direction opposée l'une à l'autre lorsque le chariot est assemblé, lesdits premier et second flancs étant assemblés à l'aide des éléments de jonction qui s'appliquent sur lesdits rebords. Puisque au moins le contour latéral du segment de panier et un rebord sont moulés d'une seule pièce avec le flanc latéral du chariot, on obtient une structure plus rigide du flanc latéral. Cette structure plus rigide permet de mieux absorber les forces exercées par des objets posés dans le panier et donc de donner une meilleure stabilité au chariot. Eu égard au fait que le contour latéral du segment de panier fait partie intégrante du flanc latéral, une force appliquée même sur la partie avant du panier est répartie sur l'ensemble du chariot. Un meilleur équilibre du chariot est ainsi obtenu, sans devoir faire appel à des éléments de renforcement qui limitent l'emboîtement. La présence des rebords permet non seulement de rigidifier la structure du chariot mais offre également un moyen approprié pour un assemblage rapide et fiable.

De plus, puisque le flanc latéral et le segment de pied forment un ensemble, il est possible par la géométrie de l'ensemble de limiter sensiblement la flexion grâce au fait que l'ensemble flanc latéral-pied est moulé en une seule pièce, il est également possible d'utiliser des moules à faible empreinte du moins en ce qui concerne la profondeur. L'emploi d'éléments de jonction qui s'appliquent sur les rebords permet d'utiliser les mêmes dimensions de flanc et donc le même moule pour obtenir différentes dimensions de chariot. Puisque ces éléments de jonction sont simples à fabriquer et n'exigent pas de moules à grandes empreintes, leur emploi permet de réduire sensiblement les investissements dans les moules et donc les frais de fabrication. Le choix particulier et judicieux dans la fabrication des différents composants du chariot permet donc non seulement de fabriquer un chariot plus solide et plus résistant mais également de le fabriquer à un coût sensiblement réduit.

Une première forme de réalisation préférentielle d'un procédé suivant l'invention est caractérisée en ce que les flancs latéraux sont moulés à une dimension prédéterminée, un jeu d'éléments de jonction étant moulé pour chaque dimension des flancs latéraux, les différents éléments dudit jeu ayant chacun une largeur prédéterminée différente l'une de l'autre. Ceci permet une construction modulaire du chariot. En partant d'une même dimension des flancs latéraux, on peut ainsi construire des chariots de différents volumes simplement en utilisant des éléments de jonction de différentes largeurs. Le coût de production de chariot de différents volumes s'en trouve ainsi réduit.

Une deuxième forme de réalisation préférentielle d'un procédé suivant l'invention est caractérisée en ce qu'au moins une ouverture est moulée dans le segment de panier de chaque flanc latéral. Grâce à la technique de moulage des flancs latéraux, il est possible d'y appliquer facilement une ouverture, puisque le pressage se fait verticalement par rapport au plan du flanc. Ainsi sans faire appel à des moules chers à fabriquer, il est possible d'y appliquer à moindre frais des ouvertures dans les flancs latéraux, sans porter atteinte à la rigidité du chariot.

De préférence un grillage est appliqué dans chacune desdites ouvertures. Ceci donne un aspect bien connu au chariot.

De préférence, deux ouvertures essentiellement triangulaires sont prévues dans chaque flanc latéral, lesdites ouvertures étant séparées par une branche qui s'étend en diagonale dans ledit flanc à partir d'une partie frontale supérieure vers une partie arrière inférieure du chariot. La présence de la branche diagonale permet de rigidifier davantage le chariot.

Une troisième forme de réalisation préférentielle d'un procédé suivant l'invention est caractérisée en ce qu'au moins un point de fixation d'une poignée est moulé simultanément avec le moulage dudit flanc latéral. Ces points de fixation forment ainsi un ensemble avec le flanc latéral, ce qui facilite la fabrication et permet de former une fixation rigide.

Une quatrième forme de réalisation préférentielle d'un procédé suivant l'invention est caractérisée en ce qu'un volet pourvu d'une saillie ayant une longueur correspondant à celle de la distance entre les bossages est monté contre la porte de telle façon que les bossages et la saillie forment une charnière. Ceci permet d'assurer une bonne fixation du volet au chariot, lequel volet peut alors servir en tant que siège d'enfant.

Une cinquième forme de réalisation préférentielle d'un procédé suivant l'invention est caractérisée en ce qu'un rail de guidage est moulé sur chaque flanc latéral en un endroit situé sous le fond du panier et en ce qu'après avoir réuni les flancs latéraux, une tablette coulissante est montée entre les rails de guidage. La tablette peut ainsi glisser dans le rail et permet d'y poser des objets sans devoir les lever trop haut, ce qui est surtout un avantage pour des objets lourds et rend l'utilisation d'un tel chariot plus attrayant pour des personnes ayant quelque peine à soulever de tels objets.

De préférence, une autre ouverture est appliquée dans l'élément de jonction servant à relier à leur partie avant les flancs latéraux, une languette d'extraction étant montée à un bord transversal de ladite ouverture. Ceci permet d'introduire facilement un panneau publicitaire dans ou devant l'autre ouverture.

De préférence, les éléments du chariot sont fabriqués en SMC. Le SMC est un matériau léger qui résiste bien aux chocs, ce qui le rend parfaitement apte à la fabrication du chariot.

L'invention sera maintenant décrite plus en détail à l'aide de dessins qui illustrent des exemples d'un chariot fabriqué par l'application du procédé suivant l'invention.

Dans les dessins :
La figure 1 illustre une vue explosée d'un exemple de chariot fabriqué par application du procédé suivant l'invention.
La figure 2 illustre en détail un flanc latéral d'un chariot suivant l'invention.
La figure 3 montre un autre exemple, également en vue explosée, d'un chariot suivant l'invention.
La figure 4 illustre un détail d'une porte pourvue d'un volet.
La figure 5 illustre le montage d'une tablette coulissante sur un chariot suivant l'invention.
La figure 6 montre l'application d'un panneau publicitaire sur un chariot suivant l'invention.
La figure 7 illustre une partie du panneau publicitaire.

Dans les dessins, une même référence a été assignée aux mêmes éléments ou à des éléments analogues.

La matière synthétique dans laquelle est fabriqué le chariot est de préférence le SMC (Sheet Molding Compound). Cette matière synthétique est entre autres utilisée pour la fabrication de pare-chocs d'automobiles et a l'avantage d'être très résistant aux chocs, facile à mouler et peu onéreuse. De plus, cette matière est pratiquement entièrement recyclable. Le moulage des différents composants du chariot se fait de préférence par compression, mais il va de soi que d'autres techniques de fabrication sont également applicables. Mis à part le composite SMC, d'autres matières synthétiques, telles que par exemple de l'époxy renforcé par des fibres de verre, peuvent être utilisées.

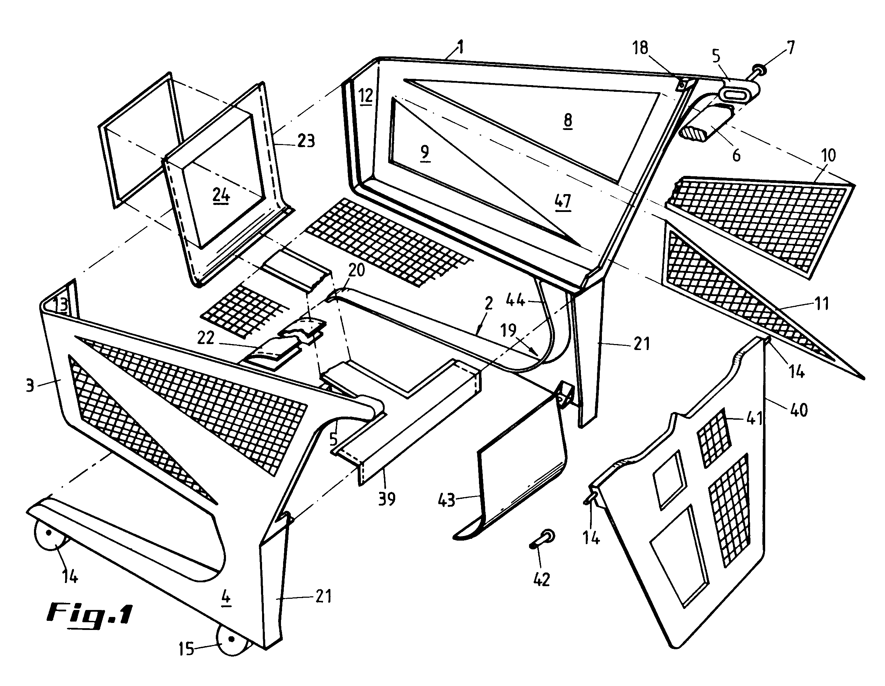

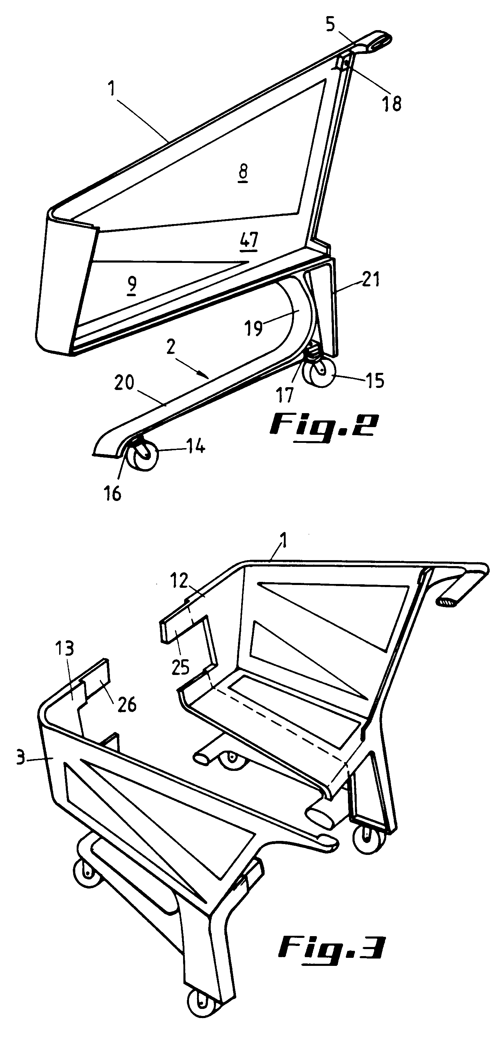

La figure 1 illustre une vue explosée d'un premier exemple d'un chariot fabriqué par application du procédé suivant l'invention. Le chariot comporte un premier 1 respectivement un second 3 flanc latéral. Chaque flanc latéral comporte un rebord 12, 13, qui s'étend sur tout le périmètre formé par la cuve du panier. Le rebord 12 du premier flanc 1 latéral et le rebord 13 du second 3 flanc latéral sont moulés de telle façon qu'ils s'étendent en une direction opposée l'un à l'autre lorsque le chariot est assemblé. Le pied du chariot comporte deux segments 2, 4 qui forment chacun un ensemble avec leur flanc latéral respectif. Comme illustré en détail à la figure 2, le segment de pied 2 et le flanc latéral 1 sont moulés en une seule pièce. Grâce à ceci, on obtient une liaison très rigide entre le segment de pied 2 et le flanc latéral 1.

Le segment de pied 2 comporte une première 19, une deuxième 20 et une troisième 21 partie qui sont moulées en une seule pièce. La première partie 19 comporte une géométrie sensiblement en épingle à cheveux, ce qui permet de bien absorber la flexion imposée par le panier, lorsque ce dernier est rempli. L'inclinaison de la deuxième partie 20 ainsi que l'inclinaison du fond du panier permettent l'emboîtement des chariots lors de leur rangement. La troisième partie 21 forme un rebord qui sert à l'assemblage des différentes parties, comme expliqué ci-dessous.

Comme mentionné ci-dessus, le segment de pied et le flanc latéral sont moulés en une seule pièce. Comme on peut le constater dans les figures 1 et 2, l'épaisseur du flanc, de son rebord et du segment de pied, est peu élevée. Ceci permet d'utiliser pour le moulage des composants du chariot un moule (poinçon/matrice) à faible empreinte, par exemple 150 mm. De tels moules sont sensiblement moins onéreux que ceux à forte empreinte. Lors du moulage, la compression se fait dans un sens qui est perpendiculaire (moulage à plat) au plan formé par le flanc latéral. Ainsi, la compression ne nécessite pas un grand déplacement du poinçon, ce qui entraînera une cadence de production plus élevée et donc moins onéreuse.

Les flancs étant moulés à plat, il est maintenant possible d'appliquer lors du moulage des ouvertures latérales 8 et 9 dans le flanc du panier, permettant d'obtenir une vision de l'extérieur vers l'intérieur du panier. Il va de soi que le nombre de deux ouvertures n'est qu'un choix et que d'autres alternatives peuvent également être envisagées. De préférence, un grillage 10, 11 est monté dans les ouvertures 8, 9. Ces grillages sont de préférence fabriqués par moulage dans la même matière que celle du flanc latéral. Ils peuvent être soit moulés simultanément avec le moulage du flanc, soit séparément et ensuite collés dans les ouvertures. L'utilisation de grillage donne ainsi un aspect bien connu au chariot. Mais il va de soi que les grillages peuvent également être réalisés en d'autres matières que celle utilisée pour le flanc, comme par exemple en ABS injecté.

De préférence, les ouvertures 8 et 9 sont séparées par une branche 47 qui s'étend en diagonale dans ledit flanc. La branche 47 part du fond du panier du côté arrière du chariot, vers une partie frontale supérieure. La branche possède de préférence une largeur qui s'accroît en direction du fond du panier. La présence de cette branche permet non seulement de délimiter en partie le contour des ouvertures 8 et 9, mais également de rigidifier le flanc latéral. La branche 47 est bien entendu moulée d'une seule pièce avec le flanc latéral.

Chaque flanc latéral est muni d'un point de fixation 5, également moulé en une seule pièce avec le flanc latéral auquel il est adjoint. Ce point de fixation sert à y fixer une poignée 6, par exemple à l'aide d'une vis 7 ou par collage de la poignée au point de fixation.

Chaque segment de pied est muni de petites roues 14, 15 fixées à l'aide d'organes de fixation appropriés 16, 17 à la partie inférieure du pied comme illustré à la figure 2.

Chaque flanc latéral comporte de préférence également un encastrement 18 appliqué dans une protubérance. Cet encastrement sert à y loger un téton 14 d'une porte 40 du chariot.

La porte est de préférence également pourvue d'ouvertures dans lesquelles sont appliqués des grillages 41. Grâce à l'utilisation du téton 14 et de l'encastrement 18, la porte peut basculer vers l'intérieur du panier afin de permettre l'emboîtement des chariots. De préférence, une pièce commutable 42 est glissée sur chaque téton 14 lors du montage de la porte. L'emploi de cette pièce commutable permet de limiter la friction du téton à l'intérieur de la protubérance.

Les troisièmes parties 21 de chaque segment de pied 2 et 4 sont reliées entre elles à l'aide d'une jupe 20 qui s'engage dans ces troisièmes parties. La jupe 43 est de préférence collée aux premières parties 11. Cette jupe est de préférence également fabriquée par moulage comme les autres composants du chariot.

Les rebords 12 et 13 de chaque flanc sont reliés par un longeron de fond 39, qui, de préférence, a la forme d'un T permettant ainsi l'application du grillage dans le fond du panier. Le longeron de fond 39 est de préférence collé aux rebords 12 et 13.

Les extrémités avant des deuxièmes parties 20 du segment de pied sont reliées entre elles à l'aide d'un autre longeron 22 qui s'engage dans ces extrémités et y est également collé. La partie frontale du panier est formée par un élément de jonction 23 qui est de préférence pourvu d'une ouverture 24 destinée à y appliquer un panneau publicitaire. La poignée 6 est de préférence montée lorsque les autres composants du chariot ont été assemblés.

La technique utilisée pour la fabrication et le montage du chariot permet maintenant de fabriquer des chariots de différents volumes tout en partant de flancs latéraux ayant une même dimension. L'obtention du volume désiré est obtenu par la largeur des éléments de jonction 43, 39, 22 et 23. Ainsi, l'on peut, par exemple, en partant des mêmes dimensions de flancs latéraux, fabriquer des chariots dont les volumes sont compris entre 45 et 80 litres. En partant, par exemple, d'un jeu de quatre dimensions différentes pour les flancs latéraux, on peut obtenir les volumes suivants :

| | |
|---|---|
| série 1 | 45 - 60 - 80 litres |
| série 2 | 80 - 100 - 125 litres |
| série 3 | 120 - 150 - 180 litres |
| série 4 | 180 - 200 - 230 litres. |

Il est donc possible d'obtenir une grande variété de dimensions pour le chariot tout en ayant un nombre de moules limité. Ceci permet de fabriquer à bon marché différents volumes de chariot car l'investissement en moules n'est pas élevé. La technique décrite permet d'utiliser un "Pas" spécifique par série, dont la largeur est donné par la section du panier. Les éléments de jonction sont ensuite fabriqués en fonction de ce Pas, ce qui procure l'avantage d'une standardisation de ces moules. L'utilisation d'un "Pas" est illustrée à l'aide du Tableau I repris ci-dessous qui reprend pour les chariots de la série 3, les différentes largeurs des éléments de jonction. Comme on peut le déduire de ce Tableau I, la largeur augmente chaque fois de 28 mm lorsque le volume augmente de 10 l.

**TABLEAU I**

| VOLUME ± 5 % | LARGEUR Ext. en mm |
|---|---|
| 120 L | 424 |
| 130 L | 452 |
| 140 L | 480 |
| 150 L | 508 |
| 160 L | 536 |
| 170 L | 564 |
| 180 L | 592 |

Grâce à l'utilisation des rebords 12 et 13 sur les flancs latéraux et également sur le segment du pied 44, il est possible d'emboîter les éléments de jonction dans ces rebords. En réduisant l'épaisseur de la matière à hauteur des rebords, il est possible d'appliquer à cet endroit les composants de telle façon que la jonction soit affleurante.

Mises à part les dimensions standard mentionnées ci-dessus, il est également possible de fabriquer des dimensions intermédiaires liées au pas décrit plus haut, par exemple en coupant des parties d'éléments de jonction. Il va de soi qu'une largeur minimale est à respecter pour assurer la stabilité latérale du chariot.

La figure 3 montre un autre exemple de réalisation d'un chariot suivant l'invention. Dans cet exemple, les flancs latéraux sont assemblés à l'aide d'éléments de jonction 25 et 26 qui forment chacun un ensemble avec le flanc latéral. En effet, pour ces chariots, tels que ceux de la série 1, la largeur du panier est trop faible pour justifier l'emploi d'éléments intermédiaires. Même le moulage en entier d'une moitié d'un chariot ne nécessite pas un moule à grande empreinte.

La figure 4 illustre une forme de réalisation particulière d'une porte 40 destinée à un chariot suivant l'invention. De nombreux chariots sont équipés d'un siège d'enfant appliqué sur la porte du chariot. Cette option est également applicable à un chariot suivant l'invention. Lorsque la porte est pourvue de l'option siège d'enfant, deux bossages 27 et 28 sont appliqués de part et d'autre d'une ligne médiane de la porte. Les bossages sont situés à une extrémité de la porte, ladite extrémité étant située près du fond du panier. Un volet 29 pourvu d'une saillie 30 est monté contre la porte 40, de telle manière que la saillie 30 vienne se poser entre les bossages. A cette fin, la saillie 30 a une longueur qui correspond à la distance qui sépare les bossages 27 et 28. L'ensemble sailliebossage forme alors une charnière permettant ainsi au volet 29 de pivoter par rapport à la porte et de former ainsi un siège d'enfant. De préférence, les bossages sont chacun pourvus à une de leurs extrémités d'une surface creuse et sont disposés de manière que les surfaces creuses soient face à face. La saillie est alors munie d'extrémités bombées destinées à s'engager dans la surface creuse. Ceci permet une bonne fixation de la saillie aux bossages. L'emploi des bossages permet d'augmenter la sécurité du siège en soulageant l'axe de rotation du volet.

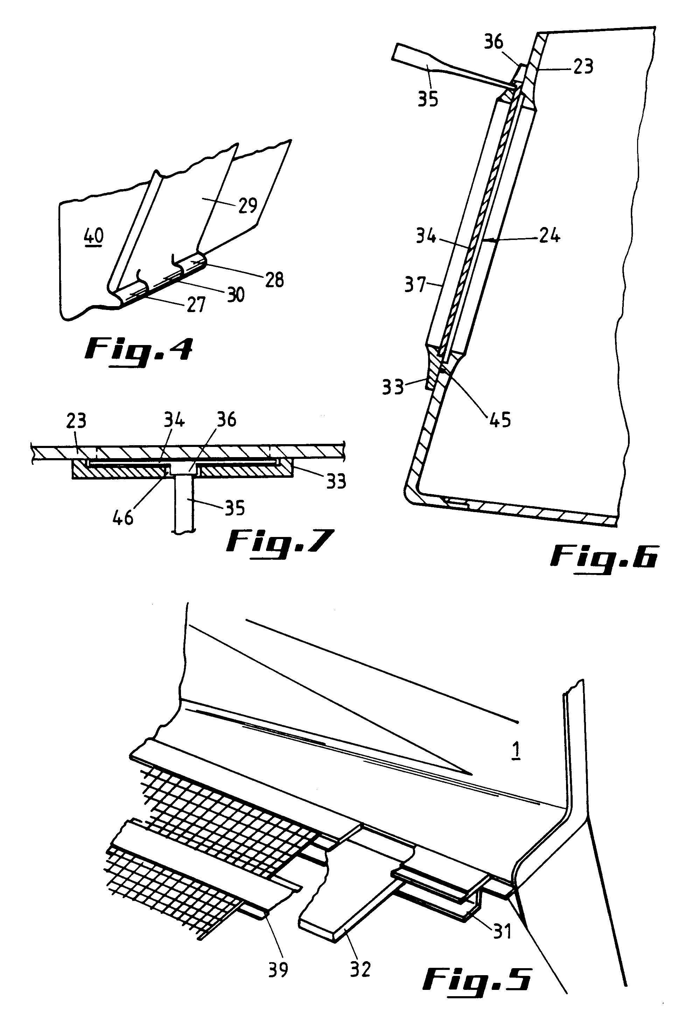

La figure 5 illustre un détail d'un autre exemple de réalisation d'un chariot suivant l'invention. Dans cet exemple, un rail de guidage 31 est appliqué sur le flanc latéral 1 en un endroit situé sous le fond du panier. Le rail de guidage est de préférence moulé séparément et ensuite collé ou vissé au flanc latéral. Une tablette coulissante 32 est montée entre les rails de guidage de chacun des flancs latéraux. L'extrémité avant du rail de guidage est pourvue d'un arrêt empêchant la tablette de coulisser vers l'avant du chariot et de créer une trop grande flexion sur le pied. La tablette glisse vers l'arrière du chariot et passe entre les deux segments du pied au-dessus de la jupe 43. La présence de cette tablette coulissante est rendue possible grâce à l'emploi de deux segments de pied. En effet, puisque le pied comprend deux segments reliés par une jupe, il est possible de laisser une ouverture entre le fond du panier et l'arête supérieure de la jupe. La tablette 32 glisse alors à travers cette ouverture.

La présence d'une telle tablette permet d'y poser des objets volumineux, difficiles à soulever. La tablette étant située en dessous du panier, il ne faudra plus soulever l'objet au-dessus du panier, ce qui réduit sensiblement l'effort à fournir par l'utilisateur.

La figure 6 illustre une vue en coupe du panneau frontal 23 du chariot. Ce panneau frontal comporte une ouverture 24 destinée à y appliquer un panneau publicitaire 34. Grâce à l'ouverture, le panneau publicitaire est visible de part et d'autre du panneau frontal. Le panneau 34 est logé dans un cadre 33 situé sur au moins une partie du pourtour de l'ouverture 24. Le cadre est soit moulé directement avec le panneau frontal, soit monté ultérieurement sur ce panneau frontal, par exemple à l'aide de petits tétons 45 diamétralement opposés. Dans ce dernier cas, des trous correspondants sont appliqués lors du moulage du panneau frontal. Le cadre comporte de préférence une feuille 37 transparente de protection et une languette 36 destinée à y accrocher le panneau 34. Un outil d'extraction 35 permet l'enlèvement du panneau publicitaire logé dans le cadre. Comme illustré à la figure 7, la languette 36 vient se loger dans un creux 46 prévu dans le cadre 33. Pour remplacer un panneau publicitaire, il suffit d'appliquer l'outil 35 sous la languette et de dégager le panneau. Le nouveau panneau publicitaire est ensuite glissé dans le cadre et fixé par la languette. Ceci est réalisé en une opération simple et rapide.

Les chariots en matière synthétique ont l'avantage qu'ils ne perturbent pas les ondes électromagnétiques utilisées à des détecteurs anti-vol, ce qui n'est pas le cas avec les chariots métalliques. Grâce au procédé de l'invention qui permet de fabriquer à bon marché un chariot en matière synthétique, le remplacement des chariots métalliques par ces chariots synthétiques deviendra économiquement plus attrayant et cela permettra donc également d'utiliser des détecteurs anti-vol utilisant des ondes électro-magnétiques afin de vérifier si tous les objets se trouvant dans le chariot ont bien été payés.

Le procédé suivant l'invention peut être utilisé pour la fabrication de tout type de chariots destinés à usage dans des magasins en libre-service. Le procédé peut ainsi être utilisé pour le fabrication de chariots à panier tant à grande qu'à petite profondeur.

## Revendications

1. Procédé de fabrication d'un chariot en matière synthétique, en particulier un chariot destiné à usage dans des magasins en libre-service, ledit chariot ayant un premier (1) et un second (3) flanc latéral qui comportent chacun un segment de pied (2, 4) et un segment de panier moulés en une seule pièce, lesdits premier et second flancs latéraux étant reliés entre eux à l'aide d'éléments de jonction (25,26 ; 22,39), caractérisé en ce que, lors du moulage des flancs latéraux, on moule en une seule pièce au moins le contour latéral du segment de panier ainsi qu'un premier (12) respectivement un second (13) rebord sur le premier resp. le second flanc latéral, lesdits premier et second rebords étant moulés de telle façon qu'ils s'étendent en une direction opposée l'une à l'autre lorsque le chariot est assemblé, lesdits premier et second flancs étant assemblés à l'aide des éléments de jonction qui s'appliquent sur lesdits rebords.

2. Procédé de fabrication suivant la revendication 1, caractérisé en ce que les flancs latéraux sont moulés à une dimension prédéterminée, un jeu d'éléments de jonction étant moulé pour chaque dimension des flancs latéraux, les différents éléments dudit jeu ayant chacun une largeur prédéterminée différente l'une de l'autre.

3. Procédé de fabrication suivant la revendication 1 ou 2, caractérisé en ce qu'au moins une ouverture (8, 9) est moulée dans le segment de panier de chaque flanc latéral.

4. Procédé suivant la revendication 3, caractérisé en ce que deux ouvertures essentiellement triangulaires sont prévues dans chaque flanc latéral, lesdites ouvertures étant séparées par une branche (47) qui s'étend en diagonale dans ledit flanc à partir d'une partie frontale supérieure vers une partie arrière inférieure du chariot.

5. Procédé de fabrication suivant la revendication 3 ou 4, caractérisé en ce qu'un grillage (10 ; 11)est appliqué dans chacune desdites ouvertures.

6. Procédé de fabrication suivant l'une des revendications 1 à 5 caractérisé en ce qu'au moins un point de fixation (5) d'une poignée (6) est moulé simultanément avec le moulage dudit flanc latéral.

7. Procédé de fabrication suivant l'une des revendications 1 à 6, caractérisé en ce qu'une porte (40) pourvue de deux bossages (27, 28) appliqués de part et d'autre d'une ligne médiane de la porte et situés à une extrémité de cette porte à hauteur du fond du panier est montée à une extrémité arrière du chariot.

8. Procédé de fabrication suivant la revendication 7, caractérisé en ce qu'un volet (29) pourvu d'une saillie (30) ayant une longueur correspondant à celle de la distance entre les bossages est monté contre la porte de telle façon que les bossages et la saillie forment une charnière.

9. Procédé de fabrication suivant l'une des revendications 1 à 8, caractérisé en ce qu'un rail (31) de guidage est moulé sur chaque flanc latéral en un endroit situé sous le fond du panier.

10. Procédé de fabrication suivant la revendication 9, caractérisé en ce qu'après avoir monté les premier et second flancs latéraux, une tablette (32) coulissante est montée entre les rails de guidage.

11. Procédé de fabrication suivant l'une des revendications 1 à 10, caractérisé en ce qu'une autre ouverture (24) est appliquée dans l'élément de jonction (23) servant à relier à leur partie avant les premier et second flancs latéraux, une languette (36) d'extraction étant montée à un bord transversal de ladite ouverture.

12. Procédé de fabrication suivant la revendication 11, caractérisé en ce qu'un cadre (33) est appliqué sur au moins une partie du pourtour de l'autre ouverture lors du moulage de l'élément de jonction.

13. Procédé de fabrication suivant l'une des revendications 1 à 12, caractérisé en ce que les éléments du chariot sont fabriqués en SMC.

## Claims

1. A method for manufacturing a cart from synthetic material, in particular a cart for use in self-service stores, said cart having a first (1) and a second (2) side flank, each of which includes a foot segment (2,4) and a basket segment, both moulded in one single piece, said first and second side flank being mutually connected by means of coupling elements (25,26 ; 22,39), characterized in that, upon moulding the side flanks, at least the side contour of the basket segment as well as a first (12), respectively a second (13) flange, on the first respectively on the second side flank, are moulded in one single piece, said first and second flank being moulded such as to extend mutually in opposite directions when the cart is assembled, said first and second flanks being assembled by means of coupling elements which are attached to said flanges.

2. A manufacturing method according to claim 1, characterized in that the side flanks are moulded at a predetermined dimension, a set of coupling elements being moulded for each side flank dimension, the different elements of said set having each a mutually different predetermined width.

3. A manufacturing method according to claim 1 or 2, characterized in that at least one opening (8,9) is moulded in the basket segment of each side flank.

4. A method according to claim 3, characterized in that two essentially triangular openings are provided in each side flank, said openings being separated by an arm (47) which extends diagonally in said flank from an upper forward portion towards a lower rearward portion of the cart.

5. A manufacturing method according to claim 3 or 4, characterized in that a mesh (10,11) is applied in each of said openings.

6. A manufacturing method according to any one of the claims 1 to 5, characterized in that at least one attachment point (5) for a handle (6) is moulded simultaneously with the moulding of said side flank.

7. A manufacturing method according to any one of the claims 1 to 6, characterized in that a gate (40) provided with two bossages (27, 28) applied on both sides of a median line of the gate and situated on an extremity of this gate at the level of the bottom of the basket, is mounted on a rearward end of the cart.

8. A manufacturing method according to claim 7, characterized in that a flap (29) provided with a projection (30) of a length corresponding to the distance between the bossages is mounted against the gate in such a manner that the bossages and the projection form a hinge.

9. A manufacturing method according to any one of the claims 1 to 8, characterized in that a guide rail (31) is moulded onto each side flank at a location situated underneath the bottom of the basket.

10. A manufacturing method according to claim 9, characterized in that after having assembled the first and the second side flanks, a pull-out tablet (32) is mounted between the guide rails.

11. A manufacturing method according to any one of the claims 1 to 10, characterized in that another opening (24) is applied in the coupling element (23) for mutually connecting the first and the second side flanks on their forward portion, an extraction tongue (36) being mounted on a transverse edge of said opening.

12. A manufacturing method according to claim 11, characterized in that a frame (33) is applied to at least a portion of the circumference of the other opening upon moulding the coupling element.

13. A manufacturing method according to any one of the claims 1 to 12, characterized in that the elements of the cart are made of SMC.

## Patentansprüche

1. Verfahren zum Herstellen eines Wagens aus Kunststoff, insbesondere eines Wagens zur Verwendung in Selbstbedienungsläden, wobei der Wagen eine erste (1) und eine zweite (3), jeweils aus einem Stück geformte Seitenwand aufweist, von denen jede einen Fußteil (2, 4) und einen Korbteil umfaßt und wobei die erste und die zweite Seitenwand miteinander durch Verbindungselemente (25, 26; 22, 39) verbunden sind, dadurch gekennzeichnet, daß man beim Ausformen der Seitenwände einstückig wenigstens den seitlichen Umriß des Korbteils sowie einen ersten (12) und einen zweiten (13) Umschlag an der ersten bzw. zweiten Seitenwand mitformt, wobei der erste und zweite Umschlag derart geformt werden, daß sie sich beim Zusammenbau des Wagens in zueinander entgegengesetzten Richtungen erstrecken, und daß die erste und die zweite Seitenwand mit Hilfe der Verbindungselemente zusammengefügt werden, welche an den Umschlägen angreifen.

2. Verfahren nach Anspruch 1, dadurch gekennzeichnet, daß die Seitenwände mit einer vorbestimmten Abmessung geformt werden, wobei ein Satz von Verbindungselementen für jede Abmessung der Seitenwände ausgeformt wird und die verschiedenen Elemente des Satzes jeweils eine vorbestimmte, voneinander verschiedene Breite haben.

3. Verfahren nach Anspruch 1 oder 2, dadurch gekennzeichnet, daß im Korbteil jeder Seitenwand wenigstens eine Öffnung (8, 9) ausgeformt wird.

4. Verfahren nach Anspruch 3, dadurch gekennzeichnet, daß zwei im wesentlichen dreieckige Öffnungen an jeder Seitenwand vorgesehen werden, wobei diese Öffnungen durch einen Schenkel (47) getrennt sind, der sich diagonal in der betreffenden Seitenwand von einem oberen Vorderabschnitt zu einem unteren Rückenabschnitt des Wagens erstreckt.

5. Verfahren nach Anspruch 3 oder 4, dadurch gekennzeichnet, daß in jeder Öffnung ein Gitter (10; 11) angebracht ist.

6. Verfahren nach einem der Ansprüche 1 bis 5, dadurch gekennzeichnet, daß wenigstens ein Befestigungspunkt (5) für einen Handgriff (6) gleichzeitig mit der Ausformung der Seitenwand mitgeformt wird.

7. Verfahren nach einem der Ansprüche 1 bis 8, dadurch gekennzeichnet, daß an einem rückwärtigen Ende des Wagens eine Tür (40) montiert wird, die mit zwei Angüssen (27, 28) versehen wird, die ihrerseits zu beiden Seiten eine Mittellinie der Türe angebracht sind und an einem Ende dieser Tür in Höhe des Korbbodens liegen.

8. Verfahren nach Anspruch 7, dadurch gekennzeichnet, daß eine mit einem Vorsprung (30) versehene Klappe (29) an der Tür montiert ist, wobei der Vorsprung (30) eine dem Abstand zwischen den Angüssen entsprechende Lange derart hat, daß die Angüsse und der Vorsprung ein Scharnier bilden.

9. Vorfahren nach einem der Ansprüche 1 bis 8, dadurch gekennzeichnet, daß eine Führungsschiene (31) an jeder Seitenwand an einer Stelle ausgeformt wird, die unterhalb des Korbbodens liegt.

10. Verfahren nach Anspruch 9, dadurch gekennzeichnet, daß nach Montage der ersten und zweiten Seitenwand ein Tablett (32) gleitverschieblich zwischen den Führungsschienen montiert wird.

11. Verfahren nach einem der Ansprüche 1 bis 10, dadurch gekennzeichnet, daß im Verbindungselement (23), das dazu dient, die erste und zweite Seitenwand an ihrem Vorderteil zu verbinden, eine weitere Öffnung (24) angebracht ist, und daß eine Ausziehzunge (36) an einem Querrand dieser Öffnung anmontiert ist.

12. Verfahren nach Anspruch 11, dadurch gekennzeichnet, daß ein Rahmen (33) auf wenigstens einen Teil des äußeren Umfangs der weiteren Öffnung bei der Ausformung des Verbindungselements angebracht wird.

13. Verfahren nach einem der Ansprüche 1 bis 12, dadurch gekennzeichnet, daß die Teile des Wagens aus SMC hergestellt werden.
